Europäisches Patentamt

European Patent Office

Office européen des brevets

(11) Veröffentlichungsnummer: **0 510 320 A1**

# EUROPÄISCHE PATENTANMELDUNG

(21) Anmeldenummer: **92102646.4**

(51) Int. Cl.5: **A23L 1/18**

(22) Anmeldetag: **18.02.92**

(30) Priorität: **01.03.91 DE 4106483**

(43) Veröffentlichungstag der Anmeldung:
**28.10.92 Patentblatt 92/44**

(84) Benannte Vertragsstaaten:
**DE FR GB IT**

(71) Anmelder: **Werner & Pfleiderer GmbH**
**Theodorstrasse 10 Postfach 30 12 20**
**W-7000 Stuttgart 30(DE)**

(72) Erfinder: **Wiedmann, Werner, Dr.-Ing.**
**Lengenfeldweg 21**
**W-7000 Stuttgart 31(DE)**
Erfinder: **Elsner, Günter, Dipl.-Ing.**
**Mörikestrasse 26**
**W-7141 Steinheim/Murr(DE)**
Erfinder: **Schmidt, Harald, Dipl.-Ing.**
**Lachpfädle 30**
**W-7257 Ditzingen(DE)**

(74) Vertreter: **Schneck, Herbert, Dipl.-Phys., Dr.**
**Rau & Schneck Patentanwälte Königstrasse**
**2**
**W-8500 Nürnberg 1(DE)**

(54) **Verfahren zur Herstellung von Backwaren bzw. backwarenähnlichen Produkten.**

(57) Bei einem Verfahren zur Herstellung von Backwaren bzw. backwarenähnlichen Produkten umfassend das Dosieren der Ausgangsstoffe wie Mehl, Zucker, Fett, Salz, Wasser sowie Aroma und Gewürzkomponenten in einem Extruder, das Mischen, das Kneten, das Kochen und die Strangformung mittels des Extruders, das Schneiden bzw. Formen des extrudierten Strangs und erforderlichenfalls die anschließende Vornahme einer Wärmenachbehandlung in einem Backofen od.dgl., ist zur Herstellung von Frischbackwaren wie Brot, Brötchen od.dgl. sowie von durch Weiterbehandlung hergestellten Paniermehr oder Dauerbackwaren, wie Zwieback, Bierstangen od.dgl., vorgesehen, daß der Feuchtigkeitsgehalt der in den Extruder eingebrachten Gesamtmischung bei 32 bis 70% liegt und die Krumenstruktur unter Zuhilfenahme von physikalischen Triebmitteln bzw. -hilfen ausgebildet wird.

FIG. 3

EP 0 510 320 A1

Die Erfindung richtet sich auf ein Verfahren zur Herstellung von Backwaren bzw. backwarenähnlichen Produkten umfassend das Dosieren der Ausgangsstoffe wie Mehl, Zucker, Fett, Salz, Wasser sowie Aroma und Gewürzkomponenten in einem Extruder, das Mischen, das Kneten, das Kochen und die Strangformung mittels des Extruders, das Schneiden bzw. Formen des extrudierten Strangs und erforderlichenfalls die anschließende Vornahme einer Wärmenachbehandlung in einem Backofen od.dgl.

Aus dem Stand der Technik ist es an sich bekannt, zur Herstellung von Backwaren einen Extruder einzusetzen.

So wird in der EP-OS 0 266 958 die Herstellung eines Nahrungsmittelprodukts beschrieben, wobei die Ausgangsmaterialien in einem Extruder auf eine Temperatur von 138 bis 171°C erhitzt werden und nach dem Verlassen des Extruders einen Feuchtigkeitsgehalt von 12,4 Gew.% aufweisen. Anschließend erfolgt eine Behandlung in einem Mikrowellenofen, wobei die angestrebte Struktur ausgebildet werden soll.

Aus der US-PS 3 054 677 ist es bekannt, einen Cerealienteig in einem Extruder zu mischen und zu bearbeiten und durch eine Düse zu extrudieren, anschließend mittels Schneidrollen zu schneiden und die geschnittenen Produkte unmittelbar anschließend mit einem heißen Luftstrom zu backen.

Die DE-OS 26 37 820 beschreibt ein Verfahren, wonach ein mit Wasser versehenes mehlartiges Material durch eine Düsenöffnung eines Extruders extrudiert wird und das Extrudat mittels einer Schneidvorrichtung in Segmente geschnitten wird, wobei der Feuchtigkeitsgehalt des Extrudats bei 5 bis 12 % liegt.

Aus der DE-OS 30 04 787 ist es bekannt, durch einen Wärmebehandlungsvorgang einer teigartigen Masse vor der Behandlung in einem Extruder und der anschließenden Extrusion Feuchtigkeit zu entziehen.

Die EP-OS 0 113 056 beschreibt die Herstellung von Keksen, wobei durch Kochextrusion eine gekochte, expandierte Getreidebasis erhalten wird, die man durch Verformung unter Druck in Keksform bringt und anschließend auf einen Wassergehalt von 1,5 bis 4,5 Gew.% trocknet.

Ein gattungsgemäßes Verfahren ist aus der Zeitschrift "FOOD ENGINEERING INT'L.", Mai 1983, Seite 41 ff bekannt. Gemäß diesem von der Anmelderin entwickelten Verfahren wird mit Hilfe eines Doppelschneckenextruders eine vollautomatische Kochextrusionsanlage für Flachbrot realisiert, wobei in einem kontinuierlichen Produktionsvorgang sich an einen Doppelschneckenextruder eine Schneideinrichtung und hieran wiederum unmittelbar eine Trocken- und Röstofen anschließt. Bei diesem Trocken- und Röstvorgang wird bei ca. 180°C die Erzeugung zusätzlicher Aromastoffe und die gewünschte Haltbarkeit erreicht.

Durch die vorstehend genannten Verfahren können backwarenähnliche Produkte wie Flachbrot, hergestellt werden. Diese Produkte weisen dementsprechend sämtlich eine feste, knackige Textur auf. Der Feuchtigkeitsgehalt von z.B. rund 4% ist sehr gering, so daß diese Produkte in die Kategorie der Dauerbackwaren fallen. Auch können mit den abgehandelten Verfahren völlig neue Arten von Backprodukten, wie Flachwaffeln, Sticks, Riegel, gefüllte Röhrchen od.dgl. hergestellt werden, welche aber ebenfalls den Dauerbackwaren zuzurechnen sind.

Demgegenüber werden sogenannte Frischbackwaren, wie z.B. Brötchen oder Brot, auch heute noch im wesentlichen durch chargenweise Arbeitsvorgänge hergestellt. Frischbackwaren zeichnen sich dadurch aus, daß sie eine weiche elastische Krume im Inneren und eine knusprige, rösche äußere Kruste aufweisen. Um solche Backwaren herzustellen wird Mehl mit Wasser und anderen Inkredenzien mittels eines Chargen- oder Contikneters zu einem Teig angeknetet. Danach folgt ein Angarprozeß. Anschließend wird der angegarte Teig geformt und dann einer sogenannten Stückgare unterzogen. Anschließend wird der Backvorgang durchgeführt und die Textur stabilisiert. Hierfür ist selbst unter Einsatz neuzeitlicher Herstellungstechniken ein Zeitaufwand von mindestens 1,5 bis 3 Std. erforderlich.

Hiervon ausgehend liegt der Erfindung die Aufgabe zugrunde, ein Verfahren der eingangs genannten Art so auszugestalten, daß unter Einsatz eines Extruders auch Frischbackwaren unter Wahrung von deren charakteristischen Eigenschaften, wie einer elastischen Krume und einer knusprigen Kruste in einem kontinuierlichen Verfahren herstellbar sind.

Diese Aufgabe wird erfindungsgemäß dadurch gelöst, daß zur Herstellung von Frischbackwaren wie Brot, Brötchen od.dgl. sowie von durch Weiterbehandlung hergestellten Paniermehl oder Dauerbackwaren wie Zwieback, Bierstangen od.dgl. der Feuchtigkeitsgehalt der in den Extruder eingebrachten Gesamtmischung bei 32 bis 70% liegt und die Krumenstruktur unter Zuhilfenahme von physikalischen Triebmitteln bzw. -hilfen ausgebildet wird. Dies bedeutet, daß mit einem erheblich höheren Feuchtigkeitsgehalt gearbeitet wird, als er zur Herstellung von Dauerbackwaren realisiert wird. Durch diesen höheren Feuchtigkeitsgehalt wird die angestrebte Konsistenz der Krume gewährleistet. Durch den anschließenden Back- bzw. Röstprozeß kann um diese Krume herum dann eine knusprige Kruste ausgebildet werden. Durch weiteres Trocknen und Rösten kann auch ein Zwieback- oder Paniermehlprodukt hergestellt werden.

Vorzugsweise liegt der Feuchtigkeitsgehalt der Gesamtmischung bei ca. 40 bis 50%.

Im Zuge der Kochextrusion wird die Gesamtmischung im Extruder auf eine Temperatur von 70 bis 120° vorgeheizt. Vorzugsweise findet eine Aufheizung auf eine Temperatur von 95 bis 105°C statt.

Hierdurch wird die Ausbildung der gewünschten Textur der Krume ermöglicht, wobei in dieser Phase ein Knetvorgang, d.h. die Einleitung wesentlicher mechanischer Kräfte, nicht stattfindet.

Die Lockerung des Produkts und damit auch die endgültige Struktur wird wesentlich durch die im Wasser gelöste Kohlensäure, die unter Wärmeeinfluß entweicht und Gasblasen bildet, unterstützt. In diesem Fall wird also Kohlensäure als physikalisches Triebmittel benutzt.

Alternativ oder auch zusätzlich kann das physikalische Triebmittel ein Gasdruckpolster im Extruder sein, das in den Teig fein dispergiert wird.

Weiterhin ist es möglich, als physikalisches Triebmittel einen Vakuumkanal am Extruderaustritt vorzusehen, in dem der austretende Teig bei einem Unterdruck von 30 bis 400 mbar, vorzugsweise bei 30 bis 100 mbar aufgeschäumt wird.

Die vorstehenden physikalischen Triebmittel können, soweit dies zweckdienlich erscheint, auch kombiniert eingesetzt werden.

Mit besonderem Vorteil erfolgt die Formgebung im Anschluß an die Extrusion durch eine Düse am Extruderausgang bei einem Unterdruck von 30 bis 400 mbar, vorzugsweise einem Unterdruck von 30 bis 100 mbar in einer Unterdruckkammer.

Anschließend an die Formgebung werden die vorgeformten Gebäckstücke einem Kurzbackprozeß bzw. Röstprozeß bei einer Temperatur von 200 bis 600°C ausgesetzt, vorzugsweise bei einer Temperatur von 350 bis 400°C. Bei dieser Wärmebehandlung wird die knusprige Kruste ausgebildet.

Günstigerweise werden die fertigen Gebäckstücke nach der Kurzback- bzw. Röstbehandlung über eine Abkühlstrecke geführt.

Nachfolgend wird die Erfindung anhand der Zeichnung und eines Ausführungsbeispiels näher erläutert. Die Zeichnung zeigt drei Flußdiagramme. Dabei zeigen:

Fig. 1    ein Diagramm betreffend die herkömmliche, chargenweise Herstellung von Frischbackwaren,
Fig. 2    die kontinuierliche Herstellung von Dauerbackwaren od.dgl. unter Einschaltung eines Extruders und
Fig. 3    das erfindungsgemäße Verfahren zur kontinuierlichen Herstellung von Frischbackwaren.

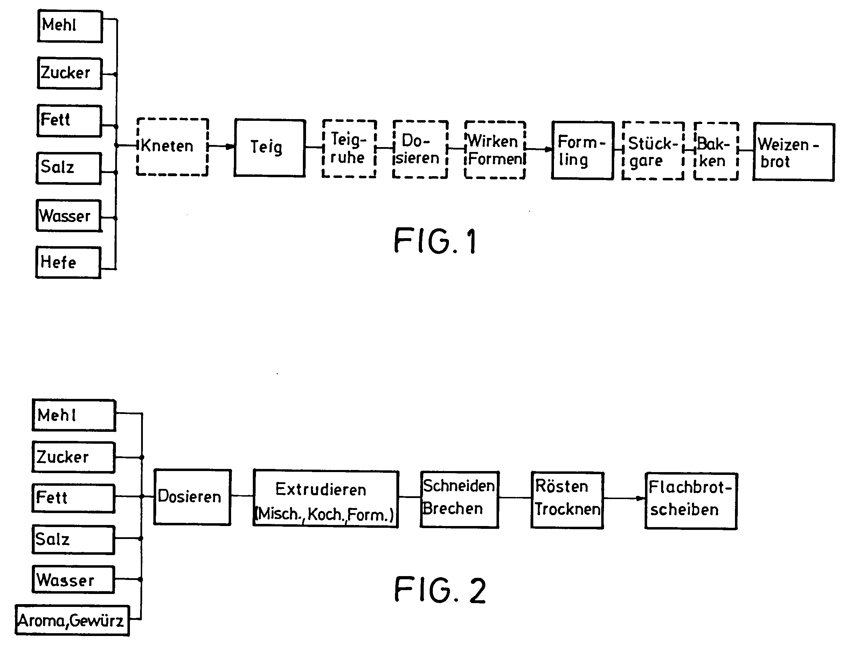

In Fig. 1 ist dargestellt, wie herkömmlicherweise Frischbackwaren, wie z.B. Brot oder Brötchen, chargenweise hergestellt werden. Bei der beispielsweise dargestellten Herstellung von Weizenbrot werden die wesentlichen Ausgangsprodukte Mehl, Zucker, Fett, Salz, Wasser und Hefe in einer Knetvorrichtung unter Erzeugung eines Teigs geknetet. Der Teig muß eine gewisse Zeit lang ruhen (Angaren). Anschließend erfolgt eine Dosierung sowie das Wirken und Formen zur Herstellung einzelner Formlinge.

Diese vorgeformten Laibe müssen wiederum eine gewisse Zeit ruhen (Stückgare).

Anschließend erfolgt das herkömmliche Backen. Nach dem chargenweisen Backen und Abkühlen stehen fertige Weizenbrote zur Verfügung.

In Fig. 2 ist die Herstellung von Flachbrot als Dauerbackware in einem kontinuierlichen Verfahren unter Verwendung eines Extruders beschrieben. Auch bei diesem Verfahren werden zunächst die wesentlichen Ausgangskomponenten Mehl, Zucker, Fett, Salz, Wasser und Aroma- und Gewürzstoffe in den Extruder dosiert. Dort erfolgt das Mischen, das Kochen und die Formgebung in Form eines flächigen, extrudierten Strangs. Dieser Strang wird geschnitten und anschließend durch Rösten getrocknet. Es stehen dann verpackungsfertige Flachbrotscheiben zur Verfügung. Der Feuchtigkeitsgehalt dieser Backwaren beträgt ca. 4%. Die Trocknung erfolgt bei einer Temperatur von ca. 280°.

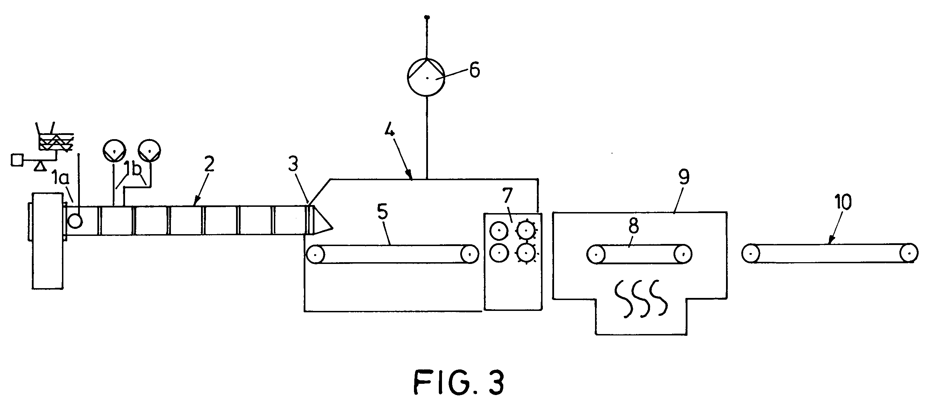

Bei dem in Fig. 3 dargestellten erfindungsgemäßen Verfahren werden die Trocken-Komponenten über eine Einlaßöffnung 1a und etwas weiter stromabwärts Flüssigkomponenten wie Wasser, Hefelösung und Kohlensäurelösung über eine Einlaßöffnung 1b in einen Extruder 2 dosiert, wobei die Gesamtmischung einen relativ hohen Feuchtigkeitsgehalt aufweist.

Nach dem Austrag an der Auslaßöffnung 3 wird der Materialstrang von einer Formgebungsvorrichtung 4 mit einer Transporteinrichtung 5 übernommen, wobei die Formgebung bei mittels einer Pumpe 6 erzeugtem Unterdruck erfolgt. Der endlose Strang des Produkts wird durch Messer 7 zerteilt.

Die so gebildeten Formstücke gelangen dann auf eine Fördereinrichtung 8, die sie durch einen Röstofen 9 befördert. Es schließt sich dann eine Auskühlzone 10 für die fertigen Produkte an.

Nachfolgend wird ein besonders einfaches Ausführungsbeispiel anhand eines backwarenähnlichen Produkts in Form eines dünnen Stranges beschrieben:
Als Zutaten werden verwendet:

| Weizen-/Roggenmehl | 63,0 % |
|---|---|
| Kochsalz | 1,3 % |
| Emulgator-Backmittel | 2,4 % |
| Kohlensäurehaltiges Wasser | 33,3 % |
| | 100,0 % |

Das kohlensäurehaltige Wasser enthält Kohlensäure in einer Konzentration von 8 bis 20 g pro 1000 ml.

Zur Geschmacks- und Aromaverbesserung kann Trockenhefe, Frischhefe oder Hefeautolysat zugegeben werden.

Die Feuchtigkeitsbilanz ist folgende:

| Trockenmix (66,7 %) | ca. 10,0 % |
|---|---|
| Zusatzwasser | 33,3 % |
| Gesamt-Prozeßwasser | 43,3 % |
| Verlust durch Extrusion | ca. 5,0 % |
| Restfeuchte am Produkt | ca. 38,0 % |

Es werden folgende Prozeßdaten eingestellt:

| Schneckendrehzahl (UPM) | 180 |
|---|---|
| Spez. Energieeinleitung (Wh/Kg) | 42 |
| Gehäusetemperierung (Grd C) | 120 |
| Produkttemperatur (Grd C) | 107 |
| Vakuum-Kammer (mbar) | 40 |
| Röstofen-Temperatur (Grd C) | 430 |

Die Verweilzeit im Extruder beträgt vorzugsweise 50 bis 80 s, die Verweilzeit im Vakuum liegt zwischen 30 und 300 s und die Verweilzeit im Röstofen zur Erzeugung der Kruste beträgt 30 bis 600 s.

Je nach Produktdurchmesser und gewünschter Produktqualität kann das erfindungsgemäße Verfahren beginnend mit der Dosierung der Rohstoffe bis zum Abschluß des Röstens in einer Zeit von 5 bis 20 Minuten abgewickelt werden.

**Patentansprüche**

1. Verfahren zur Herstellung von Backwaren bzw. backwarenähnlichen Produkten umfassend das Dosieren der Ausgangsstoffe wie Mehl, Zucker, Fett, Salz, Wasser sowie Aroma und Gewürzkomponenten in einem Extruder, das Mischen, das Kneten, das Kochen und die Strangformung mittels des Extruders, das Schneiden bzw. Formen des extrudierten Strangs und erforderlichenfalls die anschließende Vornahme einer Wärmenachbehandlung in einem Backofen od.dgl., dadurch gekennzeichnet, daß zur Herstellung von Frischbackwaren wie Brot, Brötchen od.dgl. sowie von durch Weiterbehandlung hergestellten Paniermehl oder Dauerbackwaren, wie Zwieback, Bierstangen od.dgl., der Feuchtigkeitsgehalt der in den Extruder eingebrachten Gesamtmischung bei 32 bis 70% liegt und die Krumenstruktur unter Zuhilfenahme von physikalischen Triebmitteln und/oder -hilfen ausgebildet wird.

2. Verfahren nach Anspruch 1, dadurch gekennzeichnet, daß der Feuchtigkeitsgehalt bei ca. 40 bis 50% liegt.

3. Verfahren nach Anspruch 1, dadurch gekennzeichnet, daß die Gesamtmischung im Extruder auf eine Temperatur von 70 bis 120°C, vorzugsweise 95 bis 105°C, vorgeheizt werden.

4. Verfahren nach Anspruch 1, dadurch gekennzeichnet, daß das physikalische Triebmittel in Wasser gelöste Kohlensäure ist.

5. Verfahren nach Anspruch 1, dadurch gekennzeichnet, daß das physikalische Triebmittel ein Gasdruck-

4

polster im Extruder ist, das in den Teig fein dispergiert wird.

6. Verfahren nach Anspruch 1, dadurch gekennzeichnet, daß eine physikalische Triebhilfe ein Vakuumkanal am Extruderaustritt ist, in dem der austretende Teig bei einem Unterdruck von 30 bis 400 mbar, vorzugsweise bei 30 bis 100 mbar aufgeschäumt wird.

7. Verfahren nach Anspruch 1, dadurch gekennzeichnet, daß anschließend an die Formgebung die vorgeformten Gebäckstücke bzw. der endlose Gebäckstrang einem Kurzbackprozeß bzw. einem Röstprozeß bei einer Temperatur von 200 bis 600°C ausgesetzt werden.

8. Verfahren nach Anspruch 7, dadurch gekennzeichnet, daß die Temperatur 350 bis 400°C beträgt.

9. Verfahren nach Anspruch 1, dadurch gekennzeichnet, daß gekennzeichnet, daß die Verweilzeit im Extruder 30 bis 300 s, vorzugsweise 50 bis 80 s beträgt.

10. Verfahren nach Anspruch 1, dadurch gekennzeichnet, daß die physikalische Triebhilfe in Kombination mit einem oder mehreren physikalischen Triebmitteln eingesetzt werden.

EP 0 510 320 A1

```
┌──────┐
│ Mehl │─┐
└──────┘ │
┌──────┐ │
│Zucker│─┤
└──────┘ │
┌──────┐ │  ┌ ─ ─ ─ ┐   ┌──────┐  ┌ ─ ─ ─ ┐ ┌ ─ ─ ┐ ┌ ─ ─ ─ ┐ ┌──────┐ ┌ ─ ─ ─ ┐ ┌ ─ ─ ┐ ┌──────┐
│ Fett │─┤  │Kneten │   │ Teig │  │ Teig- │ │ Do- │ │Wirken │ │Form- │ │Stück- │ │Bak-│ │Weizen-│
└──────┘ ├──│       │──▶│      │──│ ruhe  │─│sieren│─│Formen │─│ ling │─│ gare  │─│ken │ │ brot │
┌──────┐ │  └ ─ ─ ─ ┘   └──────┘  └ ─ ─ ─ ┘ └ ─ ─ ┘ └ ─ ─ ─ ┘ └──────┘ └ ─ ─ ─ ┘ └ ─ ─ ┘ └──────┘
│ Salz │─┤
└──────┘ │
┌──────┐ │
│Wasser│─┤
└──────┘ │
┌──────┐ │
│ Hefe │─┘
└──────┘
```

## FIG. 1

```
┌──────┐
│ Mehl │─┐
└──────┘ │
┌──────┐ │
│Zucker│─┤
└──────┘ │
┌──────┐ │  ┌───────┐  ┌──────────────┐  ┌─────────┐ ┌─────────┐ ┌──────────┐
│ Fett │─┤  │Dosieren│  │  Extrudieren │  │Schneiden│ │ Rösten  │ │Flachbrot-│
└──────┘ ├──│        │──│(Misch.,Koch.,│──│ Brechen │─│Trocknen │▶│scheiben  │
┌──────┐ │  │        │  │    Form.)    │  │         │ │         │ │          │
│ Salz │─┤  └───────┘  └──────────────┘  └─────────┘ └─────────┘ └──────────┘
└──────┘ │
┌──────┐ │
│Wasser│─┤
└──────┘ │
┌──────────────┐
│Aroma,Gewürz  │─┘
└──────────────┘
```

## FIG. 2

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 568 550 (C.V. FULGER) | 1-3,5,6, 9,10 | A23L1/18 |
| Y | | 4,7 | |
| | * Ansprüche 1,2,5,7,9,11,12,14,18 * | | |
| | * Spalte 1, Zeile 9 - Spalte 4, Zeile 13 * | | |
| | * Spalte 4, Zeile 53 - Zeile 66 * | | |
| | * Beispiel 4 * | | |
| | --- | | |
| X | GB-A-1 086 544 (P.J. BOORAS) | 1,4,5,6, 10 | |
| | * Ansprüche 1-5,7,8 * | | |
| | * Seite 1, Zeile 28 - Seite 2, Zeile 12 * | | |
| | * Seite 2, Zeile 31 - Zeile 62 * | | |
| | * Seite 2, Zeile 84 - Zeile 117 * | | |
| | * Seite 3, Zeile 95 - Zeile 98 * | | |
| | * Seite 4, Zeile 51 - Zeile 75 * | | |
| | * Seite 4, Zeile 95 - Zeile 104 * | | |
| | --- | | |
| X | US-A-4 350 713 (D.V. DYSON) | 1,2,4,7, 9,10 | |
| | | | **RECHERCHIERTE SACHGEBIETE (Int. Cl.5)** |
| | * Ansprüche 1-7,10-12 * | | |
| | * Spalte 2, Zeile 41 - Spalte 4, Zeile 7 * | | |
| | * Beispiele * | | A23P |
| | --- | | A23L |
| Y | US-A-1 924 826 (A.P. ANDERSON) | 4,7 | A21D |
| | * Seite 1, Zeile 25 - Zeile 55 * | | |
| | * Seite 2, Zeile 42 - Zeile 56 * | | |
| | * Seite 4, Zeile 126 - Zeile 131 * | | |
| | * Seite 5, Zeile 121 - Zeile 125 * | | |
| | * Seite 7, Zeile 69 - Zeile 72 * | | |
| | * Seite 7, Zeile 92 - Zeile 113 * | | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 07 AUGUST 1992 | VUILLAMY V.M.L. |

**KATEGORIE DER GENANNTEN DOKUMENTE**

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
..............................................................................
& : Mitglied der gleichen Patentfamilie, übereinstimmendes
   Dokument

EPO FORM 1503 03.82 (P0403)